# EUROPÄISCHE PATENTSCHRIFT

(11) **EP 1 575 798 B1**
(45) Veröffentlichungstag und Bekanntmachung des Hinweises auf die Patenterteilung: **08.08.2007**
(21) Anmeldenummer: 03797946.5
(22) Anmeldetag: 19.05.2003
(51) Int. Cl.: B60K 31/00

(54) **GESCHWINDIGKEITSREGLER MIT MEHREREN BETRIEBSMODI**
SPEED REGULATOR WITH A PLURALITY OF OPERATING MODES
REGULATEUR DE VITESSE A PLUSIEURS MODES DE FONCTIONNEMENT

(30) Priorität: 22.11.2002 DE 10254582
(43) Veröffentlichungstag der Anmeldung: 21.09.2005
(73) Patentinhaber: ROBERT BOSCH GMBH, 70442 Stuttgart (DE)
(72) Erfinder: UHLER, Werner, 76646 Bruchsal (DE); WEILKES, Michael, 74343 Sachsenheim (DE); SCHERL, Michael, 71679 Asperg (DE); MICHI, Harald, 75248 Oelbronn-Duerrn (DE); WINNER, Hermann, 76467 Bietigheim (DE)
(86) Internationale Anmeldenummer: PCT/DE2003/001605
(87) Internationale Veröffentlichungsnummer: WO 2004/048141

(56) Entgegenhaltungen:
- EP-A- 1 304 251
- DE-A- 19 958 520
- US-A1- 2003 135 318

## Beschreibung

### Stand der Technik

Die Erfindung betrifft einen Geschwindigkeitsregler für Kraftfahrzeuge nach Gattung des Hauptanspruchs. Aus DE 199 58 520 A1 ist ein Beispiel eines Geschwindigkeitsreglers bekannt, der einerseits in einem sogenannten ACC-Modus (Adaptive Cruise Control) und andererseits in einem sogenannten Stop & Go Modus betreibbar ist.

Im ACC-Modus wird die Geschwindigkeit des Fahrzeugs auf eine vom Fahrer gewählte Wunschgeschwindigkeit geregelt, sofern die Fahrbahn vor dem eigenen Fahrzeug frei ist oder vorausfahrende Fahrzeuge schneller oder weit genug entfernt sind. Ein Abstandssensor, beispielsweise ein Radarsensor, gestattet es, vorausfahrende Fahrzeuge auf der eigenen Fahrspur und sonstige Hindernisse zu erkennen und die Geschwindigkeit erforderlichenfalls so anzupassen, daß das unmittelbar voraus fahrende Fahrzeug in einem angemessenen Sicherheitsabstand verfolgt wird. Der ACC-Modus ist generell für Fahrten auf Autobahnen oder gut ausgebauten Landstraßen bei flüssigem Verkehr vorgesehen, also für Verkehrssituationen, die durch eine relativ geringe Dynamik und relativ große Fahrzeugabstände gekennzeichnet sind. Unter diesen Bedingungen genügt zur Erfassung des Verkehrsumfelds ein langreichweitiges Ortungsradar mit vergleichsweise geringer Tiefenauflösung. Anhand des Dopplereffektes ist die Relativgeschwindigkeit der georteten Objekte direkt meßbar. Um häufige Fehlreaktionen des Systems zu vermeiden, werden generell nur bewegte Radarobjekte als relevante Zielobjekte berücksichtigt, da im allgemeinen nicht zu erwarten ist, daß sich stehende Hindernisse auf der Fahrbahn befinden. In Verkehrssituationen mit höherer Dynamik, etwa bei zähflüssigem Verkehr oder Stop &, Go Verkehr oder auch im Stadtverkehr sollten dagegen auch Standziele in die Auswertung mit einbezogen werden. Außerdem ist hier wegen der generell kürzeren Fahrzeugabstände auch eine detailliertere Erfassung und Bewertung der Verkehrssituation wünschenswert. Der ACC-Modus ist für diese Verkehrssituationen ungeeignet und läßt sich deshalb nur dann aktivieren, wenn die Geschwindigkeit des eigenen Fahrzeugs oberhalb einer bestimmten Grenzgeschwindigkeit liegt, beispielsweise oberhalb von 30 km/h.

Der Stop & Go Modus ist dagegen für den unteren Geschwindigkeitsbereich vorgesehen und bietet Funktionen, die im ACC-Modus nicht verfügbar sind, insbesondere die Funktion einer automatischen Abbremsung des eigenen Fahrzeugs in den Stand, etwa beim Auffahren auf ein Stauende. Unter bestimmten Bedingungen ist dann auch ein automatisches Wiederanfahren möglich, wenn sich auch das vorausfahrende Fahrzeug wieder in Bewegung setzt. Diese Bedingungen sind beispielsweise erfüllt, wenn das eigene Fahrzeug nur relativ kurz gestanden hat und wenn das bisher verfolgte zielobjekt, also das vorausfahrende Fahrzeug, ständig im Ortungsbereich des Abstandssensors geblieben ist. Unter anderen Bedingungen kann es dagegen zweckmäßig sein, das System ganz zu deaktiveren oder beim Anfahren des vorausfahrenden Fahrzeugs lediglich eine Anfahraufforderung an den Fahrer auszugeben und ihm selbst die letzte Entscheidung zu überlassen. Für die erweiterte Funktionalität im Stop & Go Modus ist nicht nur eine Erfassung von Standzielen erforderlich, sondern generell auch eine zusätzliche Nahbereichssensorik wünschenswert, beispielsweise in der Form eines Videosystems mit elektronischer Bildauswertung, eines Nahbereichsradars oder eines lichtoptischen Abstandssensors für den Nahbereich einschließlich der linken und rechten Fahrbahnränder, so daß auch plötzlich auftretende Hindernisse frühzeitig erkannt werden können. Diese komplexere Erfassung und Bewertung des Verkehrsumfelds, die für den Stop & Go Modus erforderlich oder zumindest wünschenswert ist, könnte jedoch bei höheren Geschwindigkeiten zu Fehlreaktionen führen. Aus diesem Grund ist der Stop & Go Modus nur bei Geschwindigkeiten bis zu einer oberen Grenzgeschwindigkeit aktivierbar, beispielsweise bis zu 40 km/h.

In der Überlappungszone zwischen den Geschwindigkeitsbereichen für ACC und Stop & Co, im angenommenen Beispiel also zwischen 30 und 40 km/h, sind beide Modi aktivierbar, und die Wahl des Modus bleibt dem Fahrer überlassen. Zur Wahl des Betriebsmodus sind bei dem bekannten System spezielle Moduswähltasten vorgesehen, mit denen der Fahrer entweder den ACC-Modus oder den Stop & Go Modus aktivieren kann. Die aktive Beteiligung des Fahrers bei der Wahl des Betriebsmodus wird als sinnvoll angesehen, weil dem Fahrer auf diese Weise bewußt gemacht wird, in welchem Modus sich das System gerade befindet und welche Funktionen des Geschwindigkeitsreglers zur Verfügung stehen. So wird insbesondere verhindert, daß der Fahrer, wenn das vor ihm befindliche Fahrzeug steht, irrtümlich annimmt, der Geschwindigkeitsregler befinde sich im Stop & Go Modus, und sich darauf verläßt, daß der Geschwindigkeitsregler das Fahrzeug automatisch in den Stand bremst. Von manchen Fahrern wird jedoch die Notwendigkeit, den Betriebsmodus selbst zu wählen, als Beeinträchtigung des Bedienkomforts empfunden, und die zu diesem Zweck benötigten Befehlstasten machen das Bediensystem unübersichtlicher und erläuterungsbedürftiger.

Aus der nicht vorveröffentlichten EP 1304 251 A1 (Oberbegriff von Anspruch 1) ist ein ein Geschwindigkeitsregel-System mit Abstandssensorik für ein Kraftfahrzeug bekannt, welches nicht nur bei höheren Fahrgeschwindigkeiten, sondern auch im Stop&Go-Betrieb automatisch die Einhaltung eines Mindestabstands zu einem vorausfahrenden Fahrzeug, das vom System als ein Zielobjekt erkannt ist, gewährleistet. Dabei stellt sich für den Fahrer des Kraftfahrzeugs eine einheitliche Systemstruktur dar, die nicht offensichtlich in verschiedene Geschwindigkeits-Bereiche unterteilt ist, obwohl das Geschwindigkeitsregel-System im Stop&Go-Betrieb auf einige Rand-Bedingungen anders reagiert als bei höheren Fahrgeschwindigkeiten. So ist nach Erreichen des Fahrzeug-Stillstands durch einen automatischen Abbremsvorgang das System nur durch eine komplexe Handlung des Fahrers abschaltbar und nicht durch eine einfache Betätigung der Betriebsbremse oder des Gaspedals. Andererseits ist das System aus dem Fahrzeug-Stillstand heraus bei dem Fahrer betätigter Betriebsbremse aktivierbar. Schließlich wird im Stop&Go-Bereich mit Erkennen eines sich in der voraussichtlichen Fahrspur befindenden stehenden Zielobjekts eine automatische Abbremsung mit im wesentlichen konstanter Verzögerung eingeleitet, wobei gleichzeitig der Fahrer auf diese Situation, in der mit Ausnahme der genannten Abbremsung das Geschwindigkeits-Regelsystem abgeschaltet wird, hingewiesen wird.

### Vorteile der Erfindung

Der erfindungsgemäße Geschwindigkeitsregler mit den kennzeichnenden Merkmalen des Anspruchs 1 bietet demgegenüber bei gebührender Berücksichtigung der Sicherheitsaspekte den Vorteil eines höheren Bedienkomforts und einer größeren Übersichtlichkeit und Plausibilität des Bediensystems.

Der erfindungsgemäße Geschwindigkeitsregler ist in der Lage, den Wechsel des Betriebsmodus automatisch vorzunehmen, sofern die Bedingungen hierfür gegeben sind. So wird der Fahrer erheblich entlastet, und spezielle Befehlstasten für die Wahl des Betriebsmodus können entfallen. Wichtigstes Kriterium für die Entscheidung über einen Moduswechsel ist die Ist-Geschwindigkeit V des Fahrzeugs. Aus Transparenzgründen sollte hier als Ist-Geschwindigkeit diejenige Geschwindigkeit betrachtet werden, die dem Fahrer auch auf dem Tachometer angezeigt wird.

Mit den in den abhängigen Ansprüchen angegebenen Merkmalen werden vorteilhafte Weiterbildungen und Verbesserungen des im Hauptanspruch angegebenen Geschwindigkeitsreglers erreicht.

Zur Erhöhung der Transparenz ist es bevorzugt, wenn der Fahrer durch ein geeignetes Signal, beispielsweise ein optisches oder akustisches Signal, darauf hingewiesen wird, daß ein Moduswechsel stattgefunden hat und in welchem Modus sich der Geschwindigkeitsregler nun befindet.

In einer bevorzugten Ausführungsform weist der Geschwindigkeitsregler lediglich zwei Haupt-Betriebsmodi auf, nämlich den ACC-Modus und einen Modus, der hier als "Stop & Roll" (S&R) bezeichnet wird. Der Begriff "Stop & Roll" bezieht sich auf einen Modus, der hinsichtlich der benötigten Sensorik und der Komplexität bei der Auswertung des Verkehrsumfelds zwischen dem ACC-Modus und dem eingangs erörterten Stop & Go Modus liegt. Im Stop & Roll Modus ist wie im Stop & Go Modus ein automatisches Abbremsen des Fahrzeugs in den Stand möglich, doch ist dieser Modus aufgrund der eingeschränkten Sensorik nicht für hochdynamische Verkehrssituationen gedacht, wie sie etwa im Stadtverkehr vorliegen.

Zur Vermeidung häufiger Moduswechsel ist es zweckmäßig, wenn die Umschaltung in Abhängigkeit von der Ist-Geschwindigkeit mit einer gewissen Hysterese erfolgt. Dadurch läßt sich insbesondere erreichen, daß der Geschwindigkeitsregler im aktuellen Modus bleibt, wenn die Geschwindigkeit innerhalb des Überlappungsbereiches liegt, in dem beide Betriebsmodi erlaubt sind.

In beiden Haupt-Betriebsmodi ist wie bei herkömmlichen Geschwindigkeitsreglern dieser Art ein Übersteuern durch Betätigung des Gaspedals möglich. Die vom Fahrer über das Gaspedal eingegebene Beschleunigungsanforderung hat dann Vorrang gegenüber der kleineren, vom Geschwindigkeitsregler berechneten Sollbeschleunigung. Auch in diesen übersteuerten Zuständen ist ein Wechsel zwischen den beiden Haupt-Modi möglich.

Wenn der Geschwindigkeitsregler deaktiviert ist, kann er durch Eingabe einer Wunschgeschwindigkeit aktiviert werden. Bevorzugt erfolgt dann die Entscheidung, ob der ACC Modus oder der Stop & Roll Modus aktiviert wird, in Abhängigkeit davon, ob die Ist-Geschwindigkeit oberhalb oder unterhalb der Grenzgeschwindigkeit für ACC liegt.

### Zeichnung

Ein Ausführungsbeispiel der Erfindung ist in den Zeichnungen dargestellt und in der nachfolgenden Beschreibung näher erläutert.

Es zeigen:
Figur 1 ein Blockdiagramm des Geschwindigkeitsreglers;
Figur 2 ein Diagramm der Geschwindigkeitsbereiche, in denen die verschiedenen Betriebsmodi des Geschwindigkeitsreglers aktivierbar sind; und
Figur 3 ein Diagramm zur Erläuterung der Übergänge zwischen verschiedenen Haupt-Betriebsmodi und Zuständen des Geschwindigkeitsreglers.

### Beschreibung des Ausführungsbeispiels

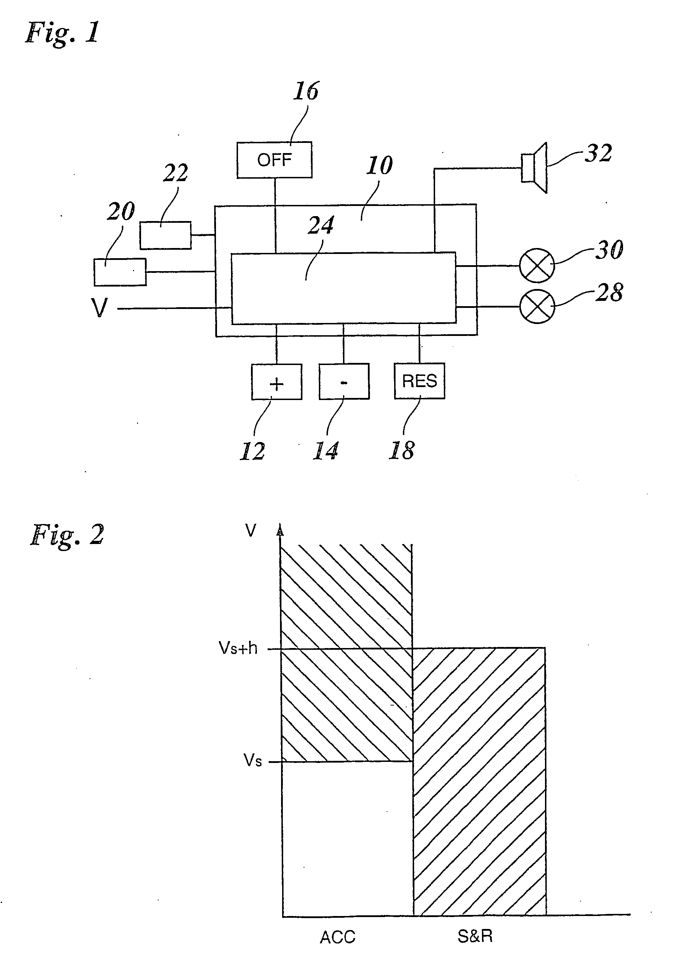

In Figur 1 ist als Blockdiagramm ein Geschwindigkeitsregler 10 dargestellt, mit dem in bekannter und hier nicht näher beschriebener Weise die Geschwindigkeit eines Kraftfahrzeugs auf eine vom Fahrer gewählte Wunschgeschwindigkeit geregelt wird. Zur Bedienung des Geschwindigkeitsreglers 10 ist üblicherweise am Lenkrad ein Multifunktionshebel vorgesehen, der die Funktionen von mehreren Funktionstasten erfüllt: einer "+"-Taste 12 zum Aktivieren des Reglers und zum Erhöhen der Wunschgeschwindigkeit Vₛₑₜ, beispielsweise in Schritten von 10 km/h, einer "-"-Taste 14 zum Aktivieren des Reglers und zum Verringern der Wunschgeschwindigkeit Vₛₑₜ, einer OFF-Taste 16 zum Deaktiveren des Reglers und einer Resume-Taste 18 zum erneuten Aktivieren des Reglers unter Übernahme der vor der letzten Deaktivierung geltenden Wunschgeschwindigkeit. Bei der ersten Aktivierung des Reglers mit Hilfe der "+"-Taste oder "-"-Taste wird als Wunschgeschwindigkeit Vₛₑₜ die auf den nächsten vollen Zehner auf- bzw. abgerundete Ist-Geschwindigkeit V des Fahrzeugs übernommen, wie sie auf dem Tachometer angezeigt wird. Wenn die Resume-Taste 18 gedrückt wird, ohne daß vorher eine Wunschgeschwindigkeit gespeichert war, so wird zur Bestimmung der Wunschgeschwindigkeit auf den vollen Zehner auf- oder abgerundet, der am wenigsten von der Ist-Geschwindigkeit abweicht.

Der Geschwindigkeitsregler 10 nimmt Signale von einem Fernbereichs-Abstandssensor 20, beispielsweise einem Fernbereichsradar, und von einer Nahbereichssensorik 22 auf, die beispielsweise durch ein Nahbereichsradar, ein lichtoptisches Abstandssensorsystem, ein Videosystem und dergleichen gebildet wird. Wenn von der Sensorik ein voraus fahrendes Fahrzeug auf der eigenen Fahrspur erfaßt wird, so wird erforderlichenfalls die Geschwindigkeit des Fahrzeugs unter die eingestellte Wunschgeschwindigkeit reduziert, so daß das voraus fahrende Fahrzeug mit einem angemessenen Sicherheitsabstand, beispielsweise mit einer wählbaren Zeitlücke von 1 bis 2 Sekunden verfolgt wird. In einem Betriebsmodus, der als ACC (Adaptive Cruise Control) bezeichnet wird, erfolgt die Abstandsregelung ausschließlich anhand der Signale des Fernbereichs-Abstandssensors 20, der einen Ortungsbereich von beispielsweise 10 bis 200 m aufweist. Dieser Betriebsmodus ist für Fahrten auf Autobahnen und gut ausgebauten Landstraßen bei flüssigem Verkehr vorgesehen, also für Verkehrssituationen, in denen generell mit einer relativ hohen Reisegeschwindigkeit gefahren wird. Darüber hinaus weist der Geschwindigkeitsregler 10 einen Regelmodus auf, der als Stop & Roll (S&R) bezeichnet wird und für Verkehrssituationen mit hoher Verkehrsdichte und entsprechend niedriger Geschwindigkeit vorgesehen ist, beispielsweise für zähflüssigen Verkehr oder Staubetrieb auf Autobahnen oder Landstraßen. In diesem Modus werden auch die Signale der Nahbereichssensorik 22 ausgewertet, so daß kürzere Fahrzeugabstände genauer erfaßt werden können. Während im ACC-Modus nur bewegliche Objekte als relevante zielobjekte berücksichtigt werden, müssen im Stop & Roll Modus auch Standziele ausgewertet werden die vom Fernbereichs-Abstandssensor 20 oder von der Nahbereichssensorik 22 erfaßt werden. Zudem weist die Nahbereichssensorik 22 auch einen größeren Ortungs-Winkelbereich auf, so daß auch Objekte erfaßt werden können, die sich im Nahbereich auf den Nebenspuren bzw. am Fahrbahnrand befinden. Hierdurch wird das System in die Lage versetzt, frühzeitig auf plötzlich auftretende Hindernisse, z.B. auf plötzlich von der Nebenspur einscherende Fahrzeuge zu reagieren.

Der Stop & Roll Modus weist mindestens eine Regelfunktion auf, die im ACC-Modus nicht verfügbar ist, insbesondere eine Stop-Funktion, mit der Fahrzeug bei Annäherung an ein stehendes Hindernis automatisch in den Stand gebremst werden kann.

Die Regelfunktionen in den beiden Betriebsmodi ACC und Stop & Roll sind als solche bekannt und werden deshalb hier nicht näher beschrieben.

Der Geschwindigkeitsregler 10 weist eine Entscheidungseinheit 24 auf, die in Abhängigkeit von der jeweiligen Verkehrssituation entscheidet, in welchem Betriebsmodus der Geschwindigkeitsregler arbeitet. Die Kriterien für diese Entscheidungen werden später noch näher erläutert werden.

Wenn die Entscheidungseinheit 24 den ACC-Modus gewählt hat, wird dies dem Fahrer durch Aufleuchten einer Anzeigelampe 28 auf dem Armaturenbrett angezeigt. Entsprechend zeigt eine Anzeigelampe 30 den Betriebsmodus Stop & Roll an. Zusätzlich ist ein Lautsprecher 32 vorgesehen, mit dem der Fahrer durch ein akustisches Signal auf einen Wechsel des Betriebsmodus aufmerksam gemacht wird.

In Figur 2 sind die Geschwindigkeitsbereiche dargestellt, in denen die Betriebsmodi ACC und Stop & Roll (S&R) aktivierbar sind. Grundsätzlich ist der ACC-Modus aktivierbar, wenn die Ist-Geschwindigkeit V des Fahrzeugs über einer Grenzgeschwindigkeit Vₛ liegt. Der S&R-Modus ist aktiverbar, wenn die Ist-Geschwindigkeit des Fahrzeugs kleiner ist als eine Geschwindigkeit Vₛ + h. Der Geschwindigkeitsbereich zwischen Vₛ und Vs + h ist somit ein Hysteresebereich, in dem entweder der ACC-Modus oder der S&R-Modus aktiv sein kann. Als Beispiel kann angenommen werden, daß die Grenzgeschwindigkeit Vₛ 30 km/h und das Hysterese-Intervall h 5 km/h beträgt.

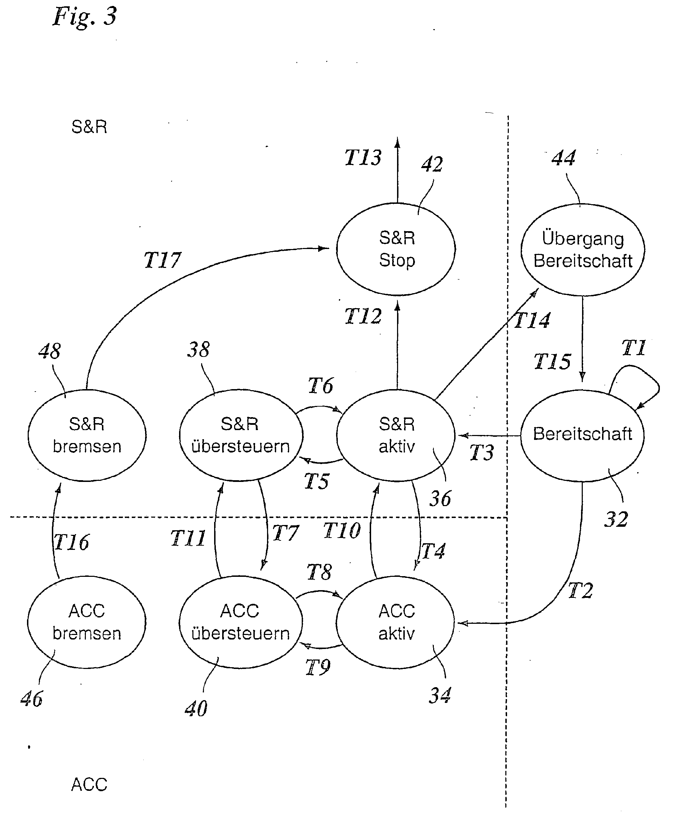

In Figur 3 sind verschiedene Betriebszustände des Geschwindigkeitsreglers sowie die wichtigsten Übergänge zwischen ihnen dargestellt. Die aktiven Betriebszustände gliedern sich in die beiden Haupt-Betriebsmodi ACC und S&R.

In einem Zustand 32 "Bereitschaft" sind die Sensorsysteme und die Auswerte- und Regelalgorithmen des Geschwindigkeitsreglers 10 aktiv, so daß das Verkehrsgeschehen verfolgt werden kann, doch werden keine Stellbefehle an das Antriebs- und Bremssystem des Fahrzeugs ausgegeben, so daß die Kontrolle über das Fahrzeug dem Fahrer überlassen bleibt. Solange der Fahrer nicht aktiv einen Befehl zum Aktivieren des Geschwindigkeitsreglers eingibt, bleibt der Geschwindigkeitsregler im Bereitschaftszustand, wie durch einen Pfeil T1 symbolisiert wird.

Der Geschwindigkeitsregler des Fahrzeugs kann von V = 0 an aktiviert werden, indem der Fahrer die "+"-Taste 12, die "-"-Taste 14 oder die Resume-Taste 18 betätigt. Die Entscheidungseinheit 24 entscheidet dann anhand der in diesem Augenblick vorliegenden Ist-Geschwindigkeit V, ob der Geschwindigkeitsregler in den Zustand 34 "ACC aktiv" oder in den Zustand 36 "S&R aktiv" übergeht. Wenn die Ist-Geschwindigkeit V größer ist als die Grenzgeschwindigkeit Vₛ, erfolgt bei Betätigung jeder der drei Tasten 12, 14, 18 ein Übergang in den Zustand 34 "ACC aktiv" entsprechend dem Pfeil T2 in Figur 3. Wenn dagegen die Ist-Geschwindigkeit V kleiner oder gleich Vₛ ist, erfolgt ein Übergang in den Zustand 36 "S&R aktiv" gemäß Pfeil T3. Der ACC-Modus läßt sich folglich nur aktivieren, wenn die Geschwindigkeit des Fahrzeugs mindestens 30 km/h beträgt. Andernfalls geht der Regler in den S&R-Modus.

Im Zustand 36 hat der Fahrer nun zwei Möglichkeiten, das Fahrzeug über 30 km/h zu beschleunigen und in den ACC-Modus überzugehen. Zum einen kann der Fahrer durch ein- oder mehrmalige Betätigung der "+"-Taste 12 eine höhere Wunschgeschwindigkeit wählen und dadurch das Fahrzeug beschleunigen. Sobald die Ist-Geschwindigkeit V größer ist als Vₛ + h, im angenommenen Beispiel also mindestens 35 km/h beträgt, veranlaßt die Entscheidungseinheit 24 einen Übergang in den zustand 34 gemäß Pfeil T4. Alternativ dazu kann der Fahrer im Zustand 36 das Gaspedal betätigen und so die S&R-Regelfunktion übersteuern, so daß der Regler gemäß Pfeil T5 in den Zustand 38 "S& R übersteuern" übergeht. Wenn das Fahrzeug auf mehr als Vₛ + h beschleunigt wird, erfolgt gemäß Pfeil T7 ein Übergang in den Zustand 40 "ACC übersteuern". Läßt der Fahrer nun das Gaspedal los, so erfolgt gemäß Pfeil T8 ein Übergang in den Zustand 34 "ACC aktiv". Im allgemeinen wird der Fahrer dann eine neue Wunschgeschwindigkeit Vset wählen, die größer ist als Vₛ.

Natürlich kann der Fahrer auch den Zustand 34 "ACC aktiv" durch Betätigen des Gaspedals übersteuern, so daß er gemäß Pfeil T9 vorübergehend in den Zustand 40 gelangt.

Der Pfeil T10 in Figur 3 beschreibt den regulären Übergang vom ACC-Modus in den S&R-Modus, genauer, den Übergang vom Zustand 34 in den Zustand 36. Dieser Übergang findet statt, sobald die Ist-Geschwindigkeit V kleiner ist als Vₛ.

In Ausnahmefällen ist auch ein Übergang aus dem Zustand 40 "ACC übersteuern" in den Zustand 38 "S&R übersteuern" möglich, wie durch den Pfeil T11 angegeben wird. Dieser Übergang findet statt, wenn die Ist-Geschwindigkeit V trotz Betätigung des Gaspedals unter Vs absinkt, z. B. wenn der Fahrer die Wunschgeschwindigkeit auf einen Wert unterhalb von Vₛ verringert hat, aber dann durch Betätigung des Gaspedals dafür sorgt, daß das Fahrzeug langsamer verzögert als der Geschwindigkeitsregler es vorgibt.

Aus dem Zustand 36 "S&R aktiv" ist auch ein Übergang in einen Zustand 42 "S&R Stop" möglich, wie durch den Pfeil T12 symbolisiert wird. Im Zustand 42 bewirkt der Geschwindigkeitsregler 10 das automatische Bremsen des Fahrzeugs in den Stand. Anschließend geht der Geschwindigkeitsregler gemäß Pfeil T13 in einen von mehreren nicht gezeigten Anfahrzuständen über, die festlegen, ob das erneute Anfahren des Fahrzeugs durch den Geschwindigkeitsregler 10 gesteuert wird, wenn die Verkehrsbedingungen dies zulassen oder wenn der Fahrer eine entsprechende Anfahraufforderung bestätigt, oder ob der Anfahrvorgang durch den Fahrer selbst gesteuert wird. Einzelheiten dieser Anfahrprozeduren werden in DE 199 58 520 A1 beschrieben.

Der Übergang in den Zustand 42 gemäß Pfeil T12 findet statt, wenn im Zustand 36 die Geschwindigkeit des Fahrzeugs (maßgeblich ist hier nicht die angezeigte, sondern die tatsächlich gemessene Geschwindigkeit) unter einen Schwellenwert von beispielsweise 2 bis 4 km/h abgenommen hat, z.B. beim Auffahren auf ein stehendes Hindernis.

In jedem der aktiven Zustände kann der Geschwindigkeitsregler 10 deaktiviert werden, wenn eines von mehreren vordefinierten Ereignissen eintritt. Die wichtigsten dieser Ereignisse sind die Betätigung der OFF-Taste 16 durch den Fahrer und die Betätigung des Bremspedals durch den Fahrer. In Figur 3 ist lediglich die Deaktivierung aus dem Zustand 36 "S&R aktiv" heraus durch einen Pfeil T14 dargestellt. Der Geschwindigkeitsregler durchläuft dann einen Übergangszustand 44, in dem die an das Antriebs- und/oder Bremssystem ausgegebenen Stellbefehle allmählich zurückgefahren werden, so daß ein ruckfreier Übergang und ein entsprechend hoher Fahrkomfort erreicht wird. Aus dem Übergangszustand 44 gelangt der Geschwindigkeitsregler dann gemäß Pfeil T15 wieder in den Zustand 32 "Bereitschaft". Die vor der Deaktivierung geltende Wunschgeschwindigkeit bleibt jedoch gespeichert und wird wieder aufgerufen, wenn der Fahrer im Zustand 32 die Resume-Taste 18 betätigt.

Der Vollständigkeit halber sind in Figur 3 noch zwei weitere Zustände 46 "ACC bremsen" und 48 "S&R bremsen" gezeigt, in denen der Geschwindigkeitsregler nur auf das Bremssystem des Fahrzeugs aber nicht auf das Antriebssystem einwirken kann. Diese Zustände werden erreicht, wenn im ACC-Modus (Zustand 34) bzw. im S&R-Modus (Zustand 36) die Parkbremse betätigt ist oder wenn in diesen Modi das elektronische Stabilitätsprogramm (ESP) des Fahrzeugs einen Fahrbahnzustand mit geringem Kraftschluß (z.B.Eisglätte) erkennt. Ein Übergang ist hier nur in der Richtung vom ACC-Modus in den S&R-Modus möglich, also vom Zustand 46 in den Zustand 48 gemäß Pfeil T16, wenn die Ist-Geschwindigkeit V kleiner wird als Vₛ. Aus dem Zustand 48 ist dann gemäß Pfeil T17 wieder ein Bremsen in den Stand möglich.

Während bei dem hier beschriebenen Ausführungsbeispiel davon ausgegangen wurde, daß die Wunschgeschwindigkeit nur in Intervallen von 10 km/h geändert werden kann, ist die Erfindung analog auch bei Geschwindigkeitsreglern anwendbar, bei denen die Wunschgeschwindigkeit stufenlos oder in kleineren Inkrementen, beispielsweise in Intervallen von 1 km/h verändert werden kann.

Die Bedingungen für den Wechsel zwischen den Modi ACC und S&R sind in der nachstehenden Tabelle noch einmal zusammengefaßt.

**Tabelle**

| | |
|---|---|
| Aktivierung ACC | |
| T2 | V > Vₛ UND (+, - ODER Resume betätigt) |
| Aktivierung S&R | |
| T3 | V ≤ Vₛ UND (+, - ODER Resume betätigt) |
| S&R nach ACC | |
| T4, T7 | V > Vₛ + h |
| ACC nach S&R | |
| T10, T11 | V ≤ Vₛ |

## Patentansprüche

1. Geschwindigkeitsregler für Kraftfahrzeuge, mit einer Eingabeeinrichtung (12,14, 18) zur Eingabe einer Wunschgeschwindigkeit (Vset) durch den Fahrer, und mit mehreren Betriebsmodi (ACC, S&R), die in unterschiedlichen Geschwindigkeitsbereichen aktivierbar sind und sich in ihrem Funktionsumfang unterscheiden, und eine Entscheidungseinheit (24), die anhand der Ist-Geschwindigkeit V des Fahrzeugs automatisch die Umschaltung des Betriebsmodus vornimmt **gekennzeichnet durch** eine Anzeigeeinrichtung (28,30) zur Anzeige des Betriebsmodus.

2. Geschwindigkeitsregler nach Anspruch 1, **gekennzeichnet durch** eine Signaleinrichtung (32), die dem Fahrer einen Wechsel des Betriebsmodus signalisiert.

3. Geschwindigkeitsregler nach einem der vorstehenden Ansprüche, **dadurch gekennzeichnet, daß** einer der Betriebsmodi (ACC) ein nur oberhalb einer Grenzgeschwindigkeit Vs aktivierbarer Betriebsmodus für höhere Fahrzeuggeschwindigkeiten ist und ein anderer Betriebsmodus (S&R) ein Betriebsmodus für kleinere Fahrzeuggeschwindigkeiten ist, der eine Funktion zum automatischen Bremsen des Fahrzeugs in den Stand aufweist und in einem Geschwindigkeitsbereich aktivierbar ist, dessen obere Grenze mindestens gleich Vs ist.

4. Geschwindigkeitsregler nach Anspruch 3, **dadurch gekennzeichnet, daß** die Entscheidungseinheit (24) einen Wechsel von dem Modus (ACC) für höhere Geschwindigkeiten in den Modus (S&R) für kleinere Geschwindigkeiten automatisch veranlaßt, wenn die Ist-Geschwindigkeit V des Fahrzeugs kleiner als die Grenzgeschwindigkeit Vs ist.

5. Geschwindigkeitsregler nach einem der Ansprüche 3 bis 4, **dadurch gekennzeichnet, daß** die Entscheidungseinheit (24) den Wechsel von dem Betriebsmodus (S&R) für kleinere Geschwindigkeiten in den Betriebsmodus (ACC) für größere Geschwindigkeiten veranlasst, wenn die Ist-Geschwindigkeit V größer ist als Vs + h, wobei h ein nicht negativer Wert ist

6. Geschwindigkeitsregler nach einem der Ansprüche 3 bis 5, **dadurch gekennzeichnet, daß** die Entscheidungseinheit (24) den Geschwindigkeitsregler im Modus (ACC) für größere Geschwindigkeiten aktiviert wenn bei der Eingabe der Wunschgeschwindigkeit die ist-Geschwindigkeit V des Fahrzeugs größer ist als die Grenzgeschwindigkeit Vs, und daß die Entscheidungseinheit (24) den Geschwindigkeitsregler im Modus (S&R) für kleinere Geschwindigkeiten aktiviert, wenn bei der Eingabe der Wunschgeschwindigkeit die Ist-Geschwindigkeit V des Fahrzeugs kleiner oder gleich Vs ist.

## Claims

1. Cruise controller for motor vehicles, having an input device (12, 14, 18) for the driver to input a desired velocity (Vset), and having a plurality of operating modes (ACC, S&R) which can be activated in different velocity ranges and which differ in their functional scope, and a decision unit (24) which automatically switches over the operating mode by reference to the actual velocity V of the vehicle, **characterized by** a display device (28, 30) for displaying the operating mode.

2. Cruise controller according to Claim 1, **characterized by** a signal device (32) which signals a changeover of the operating mode to the driver.

3. Cruise controller according to one of the preceding claims, **characterized in that** one of the operating modes (ACC) is an operating mode for relatively high vehicle velocities which can only be activated above a limiting velocity Vs, and another operating mode (S&R) is an operating mode for relatively low vehicle velocities which has a function for automatically braking the vehicle to a standstill and can be activated in a velocity range whose upper limit is at least equal to Vs.

4. Cruise controller according to Claim 3, **characterized in that** the decision unit (24) automatically brings about a changeover from the mode (ACC) for relatively high velocities into the mode (S&R) for relatively low velocities if the actual velocity V of the vehicle is lower than the limiting velocity Vs.

5. Cruise controller according to one of Claims 3 to 4, **characterized in that** the decision unit (24) brings about the changeover from the operating mode (S&R) for relatively low velocities into the operating mode (ACC) for relatively high velocities if the actual velocity V is higher than Vs + h, where h is a non-negative value.

6. Cruise controller according to one of Claims 3 to 5, **characterized in that** the decision unit (24) activates the cruise controller in the mode (ACC) for relatively high velocities if the actual velocity V of the vehicle is higher than the limiting velocity Vs when the desired velocity is input, and **in that** the decision unit (24) activates the cruise controller in the mode (S&R) for relatively low velocities if the actual velocity V of the vehicle is less than or equal to Vs when the desired velocity is input.

## Revendications

1. Régulateur de vitesse pour véhicules automobiles, comprenant :
- un dispositif d'entrée (12, 14, 18) pour entrer une vitesse (réglage) souhaitée par le conducteur et de plusieurs modes de fonctionnement (ACC, S&R) pouvant être activés dans différentes plages de vitesse et qui se distinguent par leur nombre de fonctions, et
- une unité décisionnelle (24) qui procède automatiquement à la commutation du mode de fonctionnement à partir de la vitesse réelle V du véhicule,
**caractérisé par**
un dispositif d'affichage (28, 30) pour afficher le mode de fonctionnement.

2. Régulateur de vitesse selon la revendication 1,
**caractérisé par**
un dispositif de signalisation (32) signalisant au conducteur un changement du mode de fonctionnement.

3. Régulateur de vitesse selon l'une quelconque des revendications précédentes,
**caractérisé en ce qu'**
un des modes de fonctionnement (ACC) est un mode de fonctionnement ne pouvant être activé qu'au-dessus d'une vitesse limite Vs pour des vitesses de véhicule élevées, et un autre mode de fonctionnement (S&R) est un mode de fonctionnement pour des vitesses plus faibles du véhicule et qui présente une fonction servant au freinage automatique du véhicule à l'arrêt, et qui peut être activé dans une plage de vitesse dont la limite supérieure est au moins égale à Vs.

4. Régulateur de vitesse selon la revendication 3,
**caractérisé en ce que**
l'unité décisionnelle (24) permet automatiquement de passer du mode (ACC) pour des vitesses élevées au mode (S&R) pour des vitesses faibles lorsque la vitesse réelle V du véhicule est inférieure à la vitesse limite Vs.

5. Régulateur de vitesse selon l'une quelconque des revendications 3 à 4,
**caractérisé en ce que**
l'unité décisionnelle (24) active le passage du mode de fonctionnement (S&R) pour des vitesses faibles au mode de fonctionnement (ACC) pour des vitesses élevées lorsque la vitesse réelle V est supérieure à Vs + h, h n'étant pas une valeur négative.

6. Régulateur de vitesse selon l'une quelconque des revendications 3 à 5,
**caractérisé en ce que**
l'unité décisionnelle (24) active le régulateur de vitesse dans le mode (ACC) pour des vitesses élevées lorsqu'à l'entrée de la vitesse souhaitée la vitesse réelle V du véhicule est supérieure à la vitesse limite Vs et l'unité décisionnelle (24) active le régulateur de vitesse dans le mode (S&R) pour des vitesses faibles lorsqu'à l'entrée de la vitesse souhaitée la vitesse réelle V du véhicule est inférieure ou égale à Vs.
